# EUROPEAN PATENT APPLICATION

(11) **EP 2 495 745 A1**
(43) Date of publication of application: **05.09.2012**
(21) Application number: 11001813.2
(22) Date of filing: 04.03.2011
(51) Int. Cl.: H01H 33/59, H02H 3/02, H01F 38/02

(54) **Current-rise limitation in high-voltage DC systems**

(71) Applicant: ABB Technology AG, 8050 Zürich (CH)
(72) Inventor: Schacherer, Christian, 54430 Niederrohrdorf (CH); Abplanalp, Markus, 5405 Baden-Dättwil (CH); Bujotzek, Markus, 8046 Zürich (CH); Panousis, Emmanouil, 5405 Baden-Dättwil (CH)
(74) Representative: Ingold, Mathias

(57) **Abstract**

In order to limit the current rise in a high voltage DC system, the current is led through a current rise limiter (2). The current rise limiter (2) has an inductance that increases with the current *I* through the current rise limiter (2) or with the time-derivative dI/dt of said current *I*. In such a system, the current rise limiter (2) has minor influence on normal operation, but it limits the rise rate of the current in case of a fault, thereby e.g. providing more time to switch the current off.

## Description

### Technical Field

The invention relates to a method for limiting the current rise in a high voltage DC network under fault conditions. It also relates to a high-voltage DC circuit breaker comprising a switching assembly for interrupting a high-voltage DC current and an inductive current rise limiter arranged in series to said switching assembly.

### Background Art

In high-voltage direct current (HVDC) systems (DC grids), conventional, mechanical circuit breakers have to be able to switch off large currents very quickly since there are no natural current zero crossings, thus making it difficult to extinguish the arc in the circuit breaker. Regarding this, e.g. in case of a ground fault, the current can rise quickly, and therefore a circuit breaker has to be fast, which makes it difficult to use mechanical circuit breakers at all.

To alleviate these problems, it has been known to align an inductive current rise limiting element in series to the switching assembly of the circuit breaker. Such a current rise limiting element may e.g. be an air coil with a constant inductance of about 100 mH. The inductance inherently limits the rise rate of the current in case of a fault, thereby giving the switching assembly more time for switching off the current.

It might be advantageous to use current rise limiters of even higher inductance, but this leads to system instabilities and, in particular, it impairs the system's ability to support fast (but regular) load changes. Also, inductive current limiters of large inductance are bulky and expensive.

### Disclosure of the Invention

The problem to be solved by the present invention is therefore to provide a method and a circuit breaker of the type above that limit the current rise in a high voltage DC network effectively.

This problem is solved by method and circuit breaker according to the independent claims.

Accordingly, the current rise is limited by arranging an inductive current rise limiter in the network. The current rise limiter has an inductance that increases with the current *I* that flows through the current rise limiter, and/or with the time-derivative dI/dt of said current *I*.

Hence, in normal operation, where the current *I* or its time derivative dI/dt is within a nominal range, the inductance of the current rise limiter is comparatively small and therefore has a comparatively weak influence on the stability of the network. However, in case of a fault, the current *I* and its time-derivative dI/dt increase, which leads to an increase of the inductance of the limiter and therefore improves the limiter's ability to limit the rise of the current.

This method is particularly useful in a high-voltage DC circuit breaker. Such a circuit breaker, which is used to break a high-voltage DC current, comprises a switching assembly for interrupting the high-voltage DC current as well as the inductive current rise limiter arranged in series to the switching assembly.

It must be noted that the use of limiters whose inductance rises with the current *I* or its time derivative dI/dt has been known for AC networks. However, in AC systems, these limiters are used as current limiters, not as current rise limiters. When the AC current increases, their inductance increases, which in turn leads to a limitation of the AC current. In a DC system, this mechanism would not work and therefore these limiters could not be used as current limiters, for which reason, it seems not to make sense to use such limiters in a DC system. However, the present invention has recognized that such limiters can be used as current rise limiters in a DC system.

Advantageously, the current rise limiter has an inductance that increases with the current I. Such a limiter generates an additional limiting effect on the rise rate of the current only when the current has reached a level above nominal, while its influence on current fluctuations at nominal current is low, thereby maintaining the system's capability to support sudden load changes.

Other advantageous embodiments are listed in the dependent claims as well as in the description below.

### Brief Description of the Drawings

The invention will be better understood and objects other than those set forth above will become apparent from the following detailed description thereof. Such description makes reference to the annexed drawings, wherein:
Fig. 1 is a circuit diagram of a circuit breaker with a current rise limiter,
Fig. 2 is a current vs. time diagram of the circuit breaker,
Fig. 3 is a first embodiment of a current rise limiter,
Fig. 4 is a second embodiment of a current rise limiter,
Fig. 5 is a third embodiment of a current rise limiter, and
Fig. 6 is a fourth embodiment of a current rise limiter.

### Modes for Carrying Out the Invention

### Definition(s):

The term "high voltage" encompasses voltages of 36 kV or more.

A current rise limiter having an "inductance that increases with a current" or "with a time-derivative dI/dt of said current" designates any device whose inductance increases automatically with the current or its time-derivative. In such a device, there may e.g. be a functional, bijective relationship between inductance and current (or time-derivative), or the relationship may not be bijective, but e.g. exhibit hysteresis effects. The change of inductance may e.g. also be triggered actively once the current or current rise exceeds a certain threshold. Also, the decrease of the inductance, when the current or its time-derivative drops back, may not be instantaneous, but only occur after a certain delay, such as in embodiments where a superconductor has to regain its superconductivity.

### Overview:

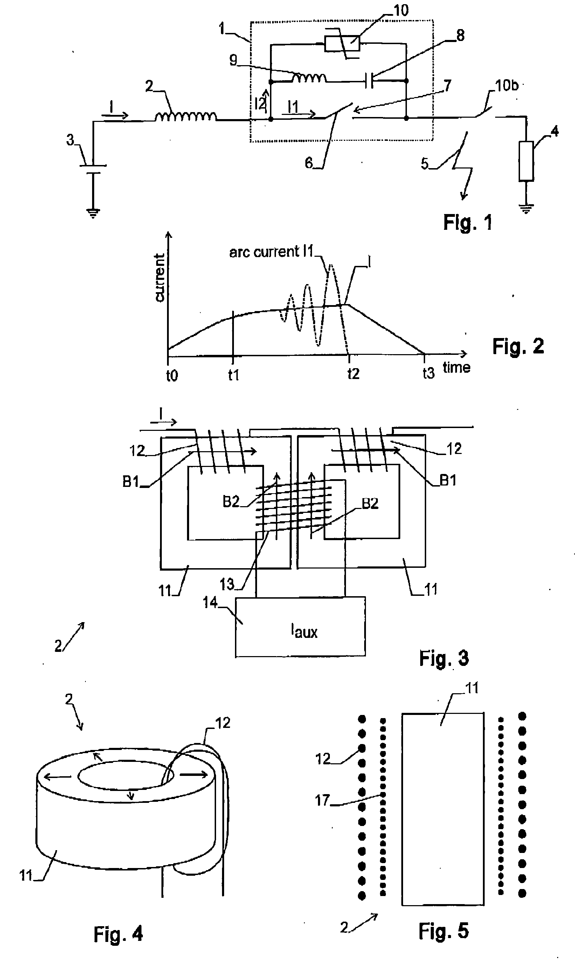

Fig. 1 shows a circuit breaker comprising a switching assembly 1 and an inductive current rise limiter 2 arranged in series thereto. A current *I* is flowing through switching assembly 1 and current rise limiter 2. The circuit breaker is arranged in a high voltage DC network, which is schematically represented by a DC voltage source 3 and a load 4. It must be noted, though, that the network can be much more complex than that, with at least three voltage sources and/or loads on both sides of the circuit breaker, and the current *I* may change direction when the distribution of loads and sources in the network changes dynamically.

The purpose of switching assembly 1 is to switch off the current *I*, e.g. in case of a ground fault as indicated by 5. In the embodiment of Fig. 1, switching assembly 1 uses a passive resonance mechanism for switching of the current, and it comprises at least one mechanical switch 6 with an arc gap 7. Switch 6 may e.g. be a blast circuit breaker, in particular a puffer circuit breaker. Arc gap 7 is arranged in a resonant circuit comprising a capacitor 8 and an inductance 9 (inductance 9 may be formed by a discrete inductor, or by the self inductance of the leads of the cables and the switch). In addition, an arrester (varistor) 10 is arranged parallel to switch 6.

As mentioned above, current rise limiter 2 has an inductance that rises with the current *I*, in particular with the absolute value of the current *I*, or with the time-derivative dI/dt, in particular with the absolute value of the time-derivative dI/dt.

The operation of the circuit breaker of Fig. 1 is schematically illustrated in Fig. 2, which shows the time behaviour of the current *I* and the current in the arc in the case of a fault. It is assumed that the current rise limiter has an inductance that increases with the current *I*.

In Fig. 2, a ground fault occurs at a time t0 and (ideally) switch 6 is opened at the same time, thereby forming an arc in arc gap 7.

As can be seen, the current *I* begins to rise quickly. However, this leads to an increase of the inductance of current rise limiter 2, which in turn increasingly limits the rise rate of current *I*. In the example of Fig. 2, this becomes apparent approximately at a time t1.

Also, and as can be seen in Fig. 2, oscillations begin to build up in the resonant circuit 7, 8, 9 and lead to current fluctuations in arc gap 7. The buildup of these oscillations is due to the negative dU/dI-characteristics of arc gap 7. At a time t2, the oscillations reach an amplitude where they are sufficient to compensate the current *I* and therefore to generate a current zero crossing in the lower branch, i.e. in the arc, at which time the arc is extinguished and the current *I*₁ in the lower branch is cut off. Another possibility is to use an inversed current injection in order to create actively a current zero in the lower branch. Current *I* will continue to flow through the upper branch and can be interrupted by a switch 10b at time t3. Hence, the current zero crossing generated by one of these concepts allows to use traditional AC breaker technology, such as the switch 6 or mechanical switch 6 or circuit breaker 6 or puffer circuit breaker 6 or even self-blast circuit breaker 6.

Due to the rise limitation induced by current rise limiter 2, more time remains for the creation of current zero before the current reaches a level where it could not be compensated by these oscillations or the injected current.

### Current rise limiter:

In the following, some advantageous embodiments of current rise limiter 2 are discussed.

In the embodiment of Fig. 3, current rise limiter 2 comprises two annular iron cores 11.

A first coil 12 is wound around each core 11, with the two coils 12 being arranged in series and carrying the current *I*, i.e. the first coils 12 are in series to switching assembly 1.

In addition, a second coil 13 is would around both cores 11. An auxiliary DC current *I*ₐᵤₓ is generated by a current source 14 and fed through second coil 13.

The winding sense of the various coils are chosen such that one of the coils 12 increases its inductance for large positive currents *I* while the other one increases its inductance for large negative currents *I*. This is how discussed in more detail for the left hand core 11 of Fig. 3.

The auxiliary current *I*ₐᵤₓ in the second coil 13 generates a magnetic field *H*ₐᵤₓ which drives the iron core 11 into saturation above the saturation flux density Bₛₐₜ. The permeability of the iron core 11 and thus the inductance of the current rise limiter 2 is low. The current *I* in the first coil 12 generates in at least one core 11 an additional magnetic field H₁ in the opposite direction of *H*ₐᵤₓ causing a reduction of the total magnetic flux density B in core 11.

In the absence of current *I*, core 11 is saturated by flux *B*, i.e. *B*₁ is above Bₛₐₜ. When a current *I* starts to flow in coil 12, it partially compensates in at least one of the cores 11, the magnetic field *H*ₐᵤₓ of the auxiliary current *I*ₐᵤₓ. When the resulting magnetic flux density *B*₁ in the iron core 11 remains higher than the saturation flux desity Bₛₐₜ, the inductance experienced by first coil 12 is low. However, when current *I* increases during a fault situation, H₁ increase as well and starts to lower the resulting total magnetic flux density B₁ below Bₛₐₜ and thus core 11 becomes unsaturated. The permeability of the unsaturated core 11 is increased, and therefore also the inductance of current rise limiter 2 increases.

The current rise limiter 2 of Fig. 3 is a saturated iron core type fault limiter with two cores 11. It must be noted, though, that if it can be assumed that current *I* flows in one direction only, a limiter with a single core and suitably oriented first and second coils 12, 13 can be used.

Another embodiment of current rise limiter 2 is shown in Fig. 4. This is a device known for AC applications, and e.g. described in EP 2 091 054. It comprises a ferromagnetic core 11 with a coil 12 wound around it. Coil 12 is in series to switching array 1. In the embodiment of Fig. 4, core 11 is for example chosen to be annular. It has a magnetic polarization arranged non-parallel to the flux generated by the current *I* through coil 12. When current *I* is low, the polarization remains constant and the inductance remains low. When current *I* rises, the magnetic field generated by the current starts to affect the polarization, and inductance increases. We refer to EP 2 091 054 for the principles of operation of such a device, which is herewith incorporated in its entirety by reference.

Yet another embodiment of current rise limiter 2 is a shielded iron core limiter as shown in Fig. 5. It comprises an iron core 11 with a coil 12 carrying the current *I* wound around it. Coil 12 is again in series to switching array 1. A superconducting shield 17, consisting of a coil of superconducting material, is arranged between coil 12 and core 11, thereby shielding coil 12 magnetically from core 11 while the current *I* is low. As soon as the current *I* is high enough to induce a current of sufficient amplitude in shield 17, shield 17 looses its superconductive properties, the field of coil 12 penetrates into core 11, and the effective permeability of core 11 increases the inductance of coil 12. The resistivity of the no longer superconducting coil 17 acts like a resistance in the primary coil 12.

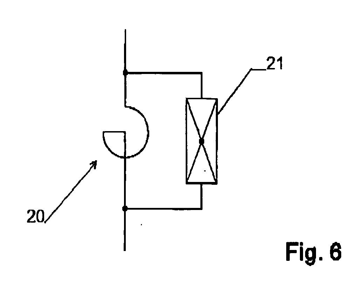

A further embodiment of a current rise limiter 2 is shown in Fig. 6. It may comprise an inductance 20 (and resistance) in parallel to an Is-limiter 21. Is-Limiters, which have been known for AC applications only, are devices comprising a current sensor as well as a combination of an extremely fast-acting switch, which can conduct a high rated current but has a low switching capacity, and a fuse with a high breaking capacity mounted in parallel to the switch. When the current sensor detects a rise of the current, a small charge is used as a stored energy mechanism to interrupt the switch (main conductor). When the main conductor has been opened, the current flows through the parallel fuse, where it is limited typically within less than one millisecond and is then shut down. Then, the current is flowing through the parallel inductance 20, which has an impedance value that is higher than the one of the closed Is-limiter 21.

Several Is-limiters can be arranged in series if a single Is-limiter is unable to carry the full voltage over inductance 20.

The current sensor of the Is-limiter can be designed to be triggered, if current *I* exceeds a given threshold. Alternatively, or in addition thereto, it can be triggered if the time-derivative dI/dt exceeds a given threshold or a combination of both thresholds.

### Notes:

It must be noted that Fig. 1 shows only one possible embodiment of switching assembly 1. Other types of switching assemblies could be used as well.

Some possible embodiments of current rise limiter 2 are described above. It must be noted, though, that any other type of current rise limiter can be used, if its inductance increases with *I* or d*I*/dt. In particular, any inductive AC fault current limiter technology with an inductance increasing with the AC current can be used as a DC current rise limiter in the present invention.

### Reference Numerals:

- 1:: switching assembly
- 2:: current rise limiter
- 3:: voltage source
- 9:: load
- 5:: fault
- 6:: switch
- 7:: arc gap
- 8:: capacitor
- 9:: inductance
- 10:: arrester (varistor)
- 10b:: switch
- 11:: iron core
- 12, 13:: first and second coils
- 14:: current source
- 17:: superconducting shield

## Claims

**1.** A method for limiting a current rise in a high voltage DC network comprising the step of arranging an inductive current rise limiter (2) in said network, wherein said current rise limiter (2) has an inductance that increases with a current *I* through said current rise limiter (2) or with a time-derivative dI/dt of said current *I*.

**2.** The method of claim 1 wherein said current rise limiter (2) has an inductance that increases with said current *I*.

**3.** The method of claim 2 wherein said current rise limiter (2) comprises an iron core (11) with a first and a second coil (12, 13) wound around it, wherein said current *I* flows through said first coil (12) and wherein an auxiliary current (*I*ₐᵤₓ) flows through said second coil (13), wherein said current *I* generates a magnetic field in said core (11) opposite to a magnetic field generated by said auxiliary current (*I*ₐᵤₓ).

**4.** The method of claim 2 wherein said current limiter comprises a ferromagnetic core (11) with a polarization aligned non-parallel to a flux generated by said current *I*.

**4.** The method of claim 1 wherein said current rise limiter (2) has an inductance that increases with the time-derivative dI/dt of said current *I*.

**5.** The method of any of the preceding claims wherein said current rise limiter (2) comprises a coil (12) wound around a core (11) with a superconducting shield (17) arranged between said coil (12) and said core (11).

**6.** A high-voltage DC circuit breaker comprising
a switching assembly for interrupting a high-voltage DC current, and
an inductive current rise limiter (2) arranged in series to said switching assembly,
wherein said current rise limiter (2) has an inductance that increases with a current *I* through said current rise limiter (2) or with a time-derivative dI/dt of said current *I*.

**7.** The circuit breaker of claim 6 wherein said current rise limiter (2) has an inductance that increases with said current *I*.

**8.** The circuit breaker of claim 7 wherein said current rise limiter (2) comprises
an iron core (11) with a first and a second coil (12, 13) wound around it, wherein said first coil (12) is in series to said switching assembly and,
a DC current source (14) generating an auxiliary DC current (*I*ₐᵤₓ) through said second coil (14), wherein a magnetic field caused by said current *I* in said core (11) is opposite to a magnetic field generated by said auxiliary current.

**9.** The circuit breaker of claim 7 wherein said current limiter comprises a ferromagnetic core (11) with a polarization aligned non-parallel to a flux generated by said current I.

**10.** The circuit breaker of claim 6 wherein said current rise limiter (2) has an inductance that increases with the time-derivative dI/dt of said current *I*.

**11.** The circuit breaker of claim 10 wherein said current rise limiter (2) comprises a coil (12) wound around a core (11) with a superconducting shield (17) arranged between said coil (12) and said core (11).

**12.** The circuit breaker of any of the claims 6 to 11, wherein said switching assembly comprises a mechanical switch (6) with an arc gap (7), wherein said arc gap (7) is arranged in a resonant circuit (7, 8, 9) comprising a capacitor (8) and an inductance (9).

**13.** Use of the circuit breaker of any of the claims 6 to 12 for breaking a high-voltage DC current.
